# EUROPEAN PATENT APPLICATION

(11) **EP 4 435 927 A2**
(43) Date of publication of application: **25.09.2024**
(21) Application number: 24165646.1
(22) Date of filing: 22.03.2024
(51) Int. Cl.: H01M 10/42, H01M 50/519, H01M 50/583

(54) **BATTERY MODULE AND ELECTRIC DEVICE**

(30) Priority: 24.03.2023 CN 202310301211
(71) Applicant: Xiamen Ampack Technology Limited, Xiamen City, Fujian Province 361000 (CN)
(72) Inventor: XIAO, Liangzhen, Xiamen City, Fujian Province, People s Republic of China, 361000 (CN); WANG, Shenbo, Xiamen City, Fujian Province, People s Republic of China, 361000 (CN)
(74) Representative: Icosa

(57) **Abstract**

A battery module includes a battery pack and a first conductive member. The first conductive member includes a first connecting part, a first functional part, and a second connecting part located at a side of the battery pack and connected in sequence, and the first connecting part is electrically connected to the battery pack. The first functional part includes a first part and a first protrusion. The first part connects the first connecting part and the second connecting part. The first protrusion extends from the first connecting part towards the second connecting part along a second direction. The first protrusion is apart from both the first part and the second connecting part, enabling the first functional part to be more easily blown

## Description

### TECHNICAL FIELD

This application relates to the field of battery technologies, and in particular, to a battery module and an electric device.

### BACKGROUND

A battery module includes a battery pack with a plurality of batteries. During charging and discharging of the battery pack, if extreme cases such as a short circuit occur, the current increases sharply, leading to the heating up of a conductive structure through which the current flows. Based on this principle, a conductive member capable of being blown is usually disposed between the battery pack and another member to establish an electrical connection, and the conductive member is designed to be blown in extreme cases with a sharp increase in the current, playing a role in protecting the battery pack.

The current structural strength configuration of the conductive member is unreasonable, and the inappropriate timing for disconnection of the conductive member arising therefrom is not conducive to improving the reliability of the battery module.

### SUMMARY

In view of this, it is necessary to provide a battery module helping improve reliability.

Some embodiments in this application provide a battery module, including a battery pack and a first conductive member. The first conductive member is connected to the battery pack and disposed on a side of the battery pack in a first direction. The first conductive member includes a first connecting part, a second connecting part, and a first functional part, where the first connecting part, the second connecting part, and the first functional part are located at a side of the battery pack in the first direction, the first connecting part is electrically connected to the battery pack, the first connecting part and the second connecting part are spaced apart from each other in a second direction perpendicular to the first direction, and the first functional part is disposed between the first connecting part and the second connecting part. The first functional part includes a first part and a first protrusion, where the first part connects the first connecting part and the second connecting part; the first protrusion extends from the first connecting part towards the second connecting part along the second direction; and the first protrusion is apart from both the first part and the second connecting part.

In the foregoing embodiments, the first protrusion is apart from both the first part and the second connecting part, enabling the first functional part to be more easily blown and reducing the risk of delayed blowing of the first functional part when the current is too large. Additionally, the provision of the first protrusion is conducive to enhancing the structural strength of the first functional part itself, reducing the risk of fracture of the first functional part under the action of an external force, enabling the first part to be disconnected at a proper time, and improving the reliability of the battery module.

In some embodiments, the first functional part further includes a second part, the second part connects the first connecting part and the second connecting part, and the second part is apart from both the first part and the first protrusion.

In the foregoing embodiments, the provision of the second part is conducive to improving the structural strength of the first functional part, improving the uniformity of force applied to the first functional part, and reducing the risk of fracture of the first functional part under the action of an external force.

In some embodiments, the first functional part further includes a second protrusion. The second protrusion extends from the second connecting part towards the first connecting part along the second direction, and the second protrusion is apart from all of the first part, the second part, the first connecting part, and the first protrusion.

In the foregoing embodiments, the second protrusion is conducive to further improving the structural strength of the first functional part itself, improving the uniformity of force applied to the first functional part, and increasing the effects of vibration reduction and buffering, and this is conducive to reducing the risk of fracture of the first functional part under the action of an external force.

In some embodiments, the first protrusion and the second protrusion are located between the first part and the second part in a third direction, and the third direction, the first direction, and the second direction are perpendicular to each other.

In the foregoing embodiments, the first protrusion and the second protrusion being located between the first part and the second part is conducive to increasing the distance between the first part and the second part in the third direction so that the first part and the second part are not concentrated in one place, and this is conducive to sharing the risk of disconnection between the first connecting part and the second connecting part due to impact force. Moreover, the first protrusion and the second protrusion being located between the first part and the second part enables a part capable of connecting the first connecting part and the second connecting part to be staggered with a part not connecting the first connecting part and the second connecting part, improving the uniformity of force applied to the first functional part, and this is conducive to reducing the risk of fracture of the first functional part under the action of an external force.

In some embodiments, in the third direction, there are a first distance between the first protrusion and the first part and a second distance between the first protrusion and the second part, the first distance is different from the second distance.

In the foregoing embodiments, the first distance is different from the second distance, so that the first protrusion is closer to one of the first part and the second part and farther away from the other of the first part and the second part. The one of the first part and the second part farther away from the first protrusion, when blown, is not easily fused with the first protrusion, reducing the risk of not electrically disconnecting the first connecting part from the second connecting part when the first functional part is blown; and the one of the first part and the second part closer to the first protrusion is less prone to fracture under the action of an external force due to the effects of vibration reduction and buffering provided by the first protrusion.

In some embodiments, in the third direction, there are a third distance between the second protrusion and the first part and a fourth distance between the second protrusion and the second part, the third distance is different from the fourth distance.

In the foregoing embodiments, the third distance is different from the fourth distance, so that the second protrusion is closer to one of the first part and the second part and farther away from the other of the first part and the second part. The one of the first part and the second part farther away from the second protrusion, when blown, is not easily fused with the second protrusion, reducing the risk of not disconnecting the first connecting part from the second connecting part when the first functional part is blown; and the one of the first part and the second part closer to the second protrusion is less prone to fracture under the action of an external force due to the effects of vibration reduction and buffering provided by the second protrusion.

In some embodiments, the first distance is different from the third distance, and the second distance is different from the fourth distance.

In some embodiments, a projection of the first protrusion in the second direction partially overlaps a projection of the second protrusion in the second direction.

In the foregoing embodiments, the projection of the first protrusion in the second direction partially overlaps the projection of the second protrusion in the second direction, and the first protrusion and the second protrusion are not completely aligned. This is conducive to improving the uniformity of force applied to the first functional part and reducing the risk of fracture of the first functional part under the action of an external force.

In some embodiments, the battery module further includes a first thermal insulation layer, the first thermal insulation layer covers the first functional part.

In the foregoing embodiments, the first thermal insulation layer is conducive to reducing the risk of excessively high temperatures affecting the battery pack when the first functional part is blown. The first thermal insulation layer covers the first functional part and also covers the blown part, and this is conducive to reducing the risk of the blown part falling into the battery pack.

In some embodiments, the battery module further includes an insulator, the insulator is disposed between the first conductive member and the battery pack in the first direction.

In the foregoing embodiments, the insulator being disposed between the first conductive member and the battery pack is conducive to reducing the risk of short circuit caused by contact of the first conductive member with a part of the battery pack with a different polarity.

In some embodiments, the insulator includes a first surface and a second surface facing opposite directions, the second surface faces the battery pack, and the first connecting part, the second connecting part, and the first functional part are located on the first surface.

In the foregoing embodiments, the second surface faces the battery pack, and the first connecting part, the second connecting part, and the first functional part are located on the first surface. This is conducive to improving the structural compactness of the battery module, enabling the insulator to support the first connecting part, the first functional part, and the second connecting part, reducing the displacement between the first connecting part, the first functional part, and the second connecting part due to force when the battery module is impacted, and reducing the risk of damage to the first connecting part, the first functional part, and the second connecting part.

In some embodiments, the battery module further includes a second conductive member, where the second conductive member includes a third connecting part, a fourth connecting part, and a second functional part, the third connecting part, the fourth connecting part, and the second functional part are located at a side of the battery pack in the first direction, the fourth connecting part is electrically connected to the battery pack, the third connecting part and the fourth connecting part are spaced apart from each other in the second direction, and the second functional part is disposed between the third connecting part and the fourth connecting part. The second functional part includes a third part, a fourth part, a third protrusion, and a fourth protrusion. The third part connects the third connecting part and the fourth connecting part. The fourth part connects the third connecting part and the fourth connecting part, where the third part is apart from the fourth part. The third protrusion extends from the third connecting part towards the fourth connecting part along the second direction, and the third protrusion is apart from all of the third part, the fourth part, and the fourth connecting part. The fourth protrusion extends from the fourth connecting part towards the third connecting part along the second direction, and the fourth protrusion is apart from all of the third part, the fourth part, the third protrusion, and the third connecting part. The third protrusion and the fourth protrusion are located between the third part and the fourth part in a third direction, and the third direction, the first direction, and the second direction are perpendicular to each other.

In the foregoing embodiments, the third protrusion is apart from both the third part and the fourth connecting part, enabling the second functional part to be more easily blown, reducing the risk of delayed blowing of the second functional part when the current is too large, and improving the reliability of the battery module. Moreover, the provision of the third protrusion is conducive to improving the structural strength of the second functional part itself, playing a role in vibration reduction and buffering, and this is conducive to reducing the risk of fracture of the second functional part under the action of an external force and improving the reliability of the battery module.

In some embodiments, in the third direction, there are a fifth distance between the third protrusion and the third part and a sixth distance between the third protrusion and the fourth part, the fifth distance is different from the sixth distance.

In the foregoing embodiments, the fifth distance is different from the sixth distance, so that the third protrusion is closer to one of the third part and the fourth part and farther away from the other of the third part and the fourth part. The one of the third part and the fourth part farther away from the third protrusion, when blown, is not easily fused with the third protrusion, reducing the risk of not electrically disconnecting the third connecting part from the fourth connecting part when the second functional part is blown; and the one of the third part and the fourth part closer to the third protrusion is less prone to fracture under the action of an external force due to the effects of vibration reduction and buffering provided by the third protrusion.

In some embodiments, in the third direction, there are a seventh distance between the fourth protrusion and the third part and an eighth distance between the fourth protrusion and the fourth part, the seventh distance is different from the eighth distance.

In the foregoing embodiments, the seventh distance is different from the eighth distance, so that the fourth protrusion is closer to one of the third part and the fourth part and farther away from the other of the third part and the fourth part. The one of the third part and the fourth part farther away from the fourth protrusion, when blown, is not easily fused with the fourth protrusion, reducing the risk of not disconnecting the third connecting part from the fourth connecting part when the second functional part is blown; and the one of the third part and the fourth part closer to the fourth protrusion is less prone to fracture under the action of an external force due to the effects of vibration reduction and buffering provided by the fourth protrusion.

In some embodiments, a projection of the third protrusion in the second direction partially overlaps a projection of the fourth protrusion in the second direction.

In the foregoing embodiments, the projection of the third protrusion in the second direction partially overlaps the projection of the fourth protrusion in the second direction, and the third protrusion and the fourth protrusion are not completely aligned. This is conducive to improving the uniformity of force applied to the second functional part and, thereby, reducing the risk of fracture of the second functional part under the action of an external force.

In some embodiments, a projection of the first functional part in the second direction at least partially overlaps a projection of the second functional part in the second direction.

In the foregoing embodiments, the projection of the first functional part in the second direction at least partially overlaps the projection of the second functional part in the second direction, so that the first functional part is at least partially aligned in the second direction. This is conducive to allowing the first functional part and the second functional part to have more uniform influence on the battery pack when the temperature rises.

In some embodiments, the battery module further includes a second thermal insulation layer, the second thermal insulation layer covers the second functional part.

In the foregoing embodiments, the second thermal insulation layer is conducive to reducing the risk of excessively high temperatures affecting the battery pack when the second functional part is blown. The second thermal insulation layer covers the second functional part and also covers the blown part, and this is conducive to reducing the risk of the blown part falling into the battery pack.

In some embodiments, the battery module further includes an insulator, the insulator is disposed between the second conductive member and the battery pack in the first direction.

In the foregoing embodiments, the insulator being disposed between the second conductive member and the battery pack is conducive to reducing the risk of short circuit caused by contact of the second conductive member with a part of the battery pack with a different polarity.

In some embodiments, the insulator includes a first surface and a second surface facing opposite directions, the second surface faces the battery pack, and the third connecting part, the fourth connecting part, and the second functional part are located on the first surface.

In the foregoing embodiments, the third connecting part, the second functional part, and the fourth connecting part are located on the first surface, and the second surface faces the battery pack and is in contact with the battery pack. This is conducive to improving the structural compactness of the battery module, enabling the insulator to support the third connecting part, the second functional part, and the fourth connecting part, reducing the displacement between the third connecting part, the second functional part, and the fourth connecting part due to force when the battery module is impacted, and reducing the risk of damage to the third connecting part, the second functional part, and the fourth connecting part.

In some embodiments, the battery module further includes a circuit board, where the circuit board is electrically connected to both the second connecting part and the third connecting part, and in the first direction, the circuit board is disposed on a side of the battery pack connected to the first conductive member and the second conductive member. When viewed in the first direction, the circuit board is apart from the first conductive member, and the circuit board is also apart from the second conductive member.

In the foregoing embodiments, the first conductive member and the second conductive member are both apart from the circuit board when viewed in the first direction, and this is conducive to reducing the risk of short circuit caused by contact of the first conductive member and the second conductive member with other electronic components on the circuit board.

In some embodiments, the battery module further includes a circuit board, and the circuit board is electrically connected to the first conductive member.

In the foregoing embodiments, the electrical connection between the circuit board and the first conductive member is conducive to disconnecting from the battery pack in a timely manner after the first conductive member is blown in case of excessive current passing through the circuit board, and is conducive to protecting the circuit board.

In some embodiments, the circuit board is electrically connected to the second connecting part, and in the first direction, the circuit board is disposed on a side of the battery pack connected to the first conductive member.

In the foregoing embodiments, the electrical connection between the circuit board and the second connecting part is conducive to disconnecting the circuit board from the battery pack in a timely manner after the first conductive member is blown, and thereby is conducive to protecting the circuit board.

In some embodiments, the circuit board is apart from the first conductive member when viewed in the first direction.

In the foregoing embodiments, the first conductive member is apart from the circuit board when viewed in the first direction, and this is conducive to reducing the risk of short circuit caused by contact of the first conductive member with other electronic components on the circuit board.

In some embodiments, the battery module further includes a first housing, a second housing, and a third housing connected, the first housing, the second housing, and the third housing enclose an accommodating cavity, and the accommodating cavity accommodates the battery pack and the first conductive member.

In the foregoing embodiments, the battery pack and the first conductive member being accommodated in the accommodating cavity is conducive to sealing the battery pack and the first conductive member and plays a protective role for the battery pack and the first conductive member, thereby reducing the risk of safety problems caused by the exposure of the battery pack and the first conductive member.

In addition, this application further provides an electric device, helping improve reliability.

Some embodiments of this application provide an electric device. The electric device includes the battery module in any one of the foregoing embodiments.

In the foregoing embodiments, the battery module is conducive to disconnecting circuits in extreme cases in a timely manner, playing a role in protecting the battery module, and is conducive to protecting the circuits when the battery module is impacted, thereby improving the reliability of the electric device using the battery module.

The battery module in this application includes a battery pack and a first conductive member. The first conductive member includes a first connecting part, a first functional part, and a second connecting part connected in sequence. The first functional part includes a first part and a first protrusion. The first part connects the first connecting part and the second connecting part. The first protrusion extends from the first connecting part towards the second connecting part along the second direction. The first protrusion is apart from both the first part and the second connecting part, enabling the first functional part to be more easily blown and reducing the risk of delayed blowing of the first functional part when the current is too large. Additionally, the provision of the first protrusion is conducive to enhancing the structural strength of the first functional part itself, reducing the risk of fracture of the first functional part under the action of an external force, enabling the first part to be disconnected at a proper time, and improving the reliability of the battery module.

### BRIEF DESCRIPTION OF DRAWINGS

FIG. 1 is a side view of a battery module according to an embodiment of this application.
FIG. 2 is a schematic cross-sectional diagram of the battery module in FIG. 1.
FIG. 3 is a schematic exploded view of a battery module according to an embodiment of this application.
FIG. 4 is a schematic structural diagram of a battery according to an embodiment of this application.
FIG. 5 is a schematic structural diagram of a battery according to another embodiment of this application.
FIG. 6 is a schematic diagram of a battery module with housings hidden according to an embodiment of this application.
FIG. 7 is a schematic exploded view of a battery module with housings hidden according to an embodiment of this application.
FIG. 8 is a top view of a battery module with housings and an insulator hidden according to an embodiment of this application.
FIG. 9 is a locally enlarged view of position A in FIG. 8.
FIG. 10 is a locally enlarged view of position B in FIG. 8.
FIG. 11 is a schematic diagram of an electric device according to an embodiment of this application.

**Reference signs of main components**

| | |
|---|---|
| Battery module | 100 |
| Battery pack | 10 |
| First battery group | 11 |
| Battery | 111 |
| Cylindrical body | 111a |
| Cover body | 111b |
| Packaging bag | 111c |
| Electrode terminal | 111d |
| Second battery group | 12 |
| First terminal | 13 |
| Second terminal | 14 |
| Insulator | 20 |
| First surface | 21 |
| Second surface | 22 |
| First conductive member | 30 |
| First connecting part | 31 |
| Second connecting part | 32 |
| First functional part | 33 |
| First part | 331 |
| First protrusion | 332 |
| Second part | 333 |
| Second protrusion | 334 |
| First thermal insulation layer | 40 |
| Second conductive member | 50 |
| Third connecting part | 51 |
| Fourth connecting part | 52 |
| Second functional part | 53 |
| Third part | 531 |
| Third protrusion | 532 |
| Fourth part | 533 |
| Fourth protrusion | 534 |
| Second thermal insulation layer | 60 |
| Circuit board | 70 |
| Interface | 71 |
| First housing | 101 |
| First wall | 1011 |
| Second wall | 1012 |
| Third wall | 1013 |
| Fourth wall | 1014 |
| Second housing | 102 |
| Third housing | 103 |
| Accommodating cavity | 10a |
| Device main body | 200 |
| Electric device | 1000 |
| First distance | D1 |
| Second distance | D2 |
| Third distance | D3 |
| Fourth distance | D4 |
| Fifth distance | D5 |
| Sixth distance | D6 |
| Seventh distance | D7 |
| Eighth distance | D8 |
| First direction | X |
| Second direction | Y |
| Third direction | Z |

### DETAILED DESCRIPTION

The following describes the technical solutions in the embodiments of this application with reference to the accompanying drawings in the embodiments of this application. Apparently, the described embodiments are only some rather than all of the embodiments of this application.

It should be noted that, when one component is deemed as being "connected to" another component, it can be directly connected to the another component, or there can be a component in between. When one component is deemed as being "disposed on/in" another component, it can be directly disposed on the another component, or there can be a component in between. The terms "top", "bottom", "upper", "lower", "left", "right", "front", "rear", and other similar expressions as used herein are for illustration only.

The term "perpendicular" is used to describe an ideal state between two parts. In actual production or use, an approximation of this perpendicular state can exist between two parts. For example, combined with a numerical description, being perpendicular may refer to an included angle range between two straight lines within 90°±10°, a dihedral angle range between two planes within 90°±10°, or an included angle range between a straight line and a plane within 90°±10°. Two parts described as "perpendicular" may not be absolute straight lines or planes but may also be approximately straight lines or planes. From a macro perspective, a part can be considered a "straight line" or "plane" if the overall extension direction is a straight line or plane.

It should be noted that when a parameter is greater than, equal to, or less than an endpoint value, it should be understood that the endpoint value allows a tolerance of ±5%.

Unless otherwise specified, the term "plural" as used herein refers to two or more.

Unless otherwise defined, all technical and scientific terms used herein shall have the same meanings as commonly understood by those skilled in the art to which this application pertains. The terms used herein in the specification of this application are for description of specific embodiments only without any intention to limit this application.

This application discloses a battery module. The battery module includes a battery pack, an insulator, and a first conductive member. The insulator is connected to the battery pack and disposed on a side of the battery pack in a first direction. The first conductive member includes a first connecting part, a second connecting part, and a first functional part, where the first connecting part, the second connecting part, and the first functional part are located at a side of the insulator facing away from the battery pack, the first connecting part is electrically connected to the battery pack, the first connecting part and the second connecting part are spaced apart from each other in a second direction perpendicular to the first direction, and the first functional part is disposed between the first connecting part and the second connecting part. The first functional part includes a first part and a first protrusion, where the first part connects the first connecting part and the second connecting part; the first protrusion extends from the first connecting part towards the second connecting part along the second direction; and the first protrusion is apart from both the first part and the second connecting part.

The first protrusion is apart from both the first part and the second connecting part, enabling the first functional part to be more easily blown and reducing the risk of delayed blowing of the first functional part when the current is too large. Additionally, the provision of the first protrusion is conducive to enhancing the structural strength of the first functional part itself, reducing the risk of fracture of the first functional part under the action of an external force, enabling the first part to be disconnected at a proper time, and improving the reliability of the battery module.

The following describes some embodiments of this application with reference to the accompanying drawings. In absence of conflicts, the following embodiments and features in the embodiments may be combined.

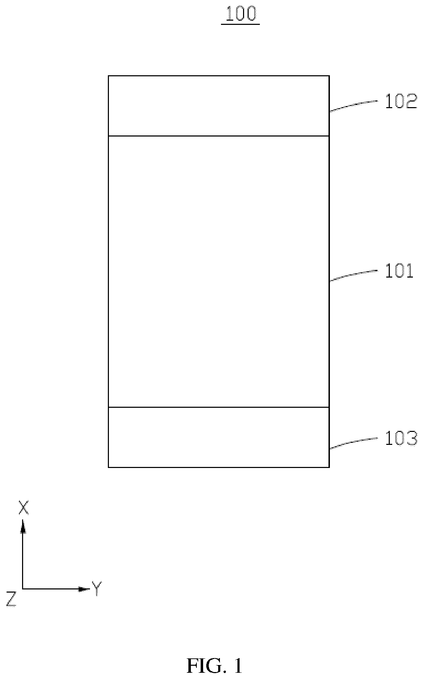

Referring to FIG. 1 to FIG. 3, an embodiment of this application provides a battery module 100. The battery module 100 includes a battery pack 10 and a first conductive member 30, the first conductive member 30 being electrically connected to the battery pack 10. The first conductive member 30 includes a first connecting part 31, a second connecting part 32, and a first functional part 33 connecting the first connecting part 31 and the second connecting part 32. The first connecting part 31, the second connecting part 32, and the first functional part 33 are located on a side of the battery pack 10 in a first direction, and the first connecting part 31 is electrically connected to the battery pack 10.

In some embodiments, referring to FIG. 1 to FIG. 3, the battery module 100 further includes a first housing 101, a second housing 102, and a third housing 103 connected, the first housing 101, the second housing 102, and the third housing 103 enclose an accommodating cavity 10a, and the accommodating cavity 10a accommodates the battery pack 10 and the first conductive member 30.

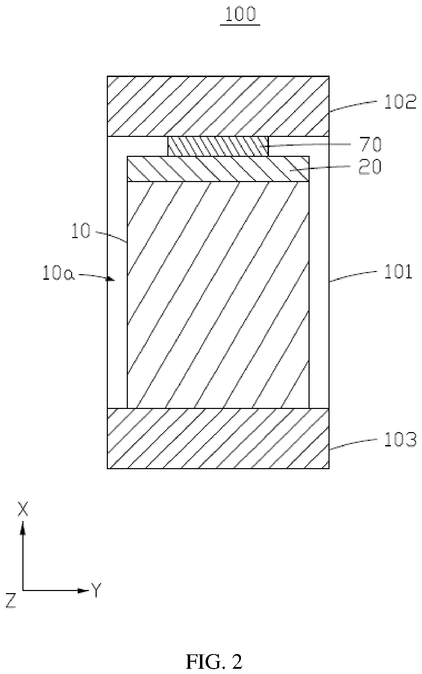

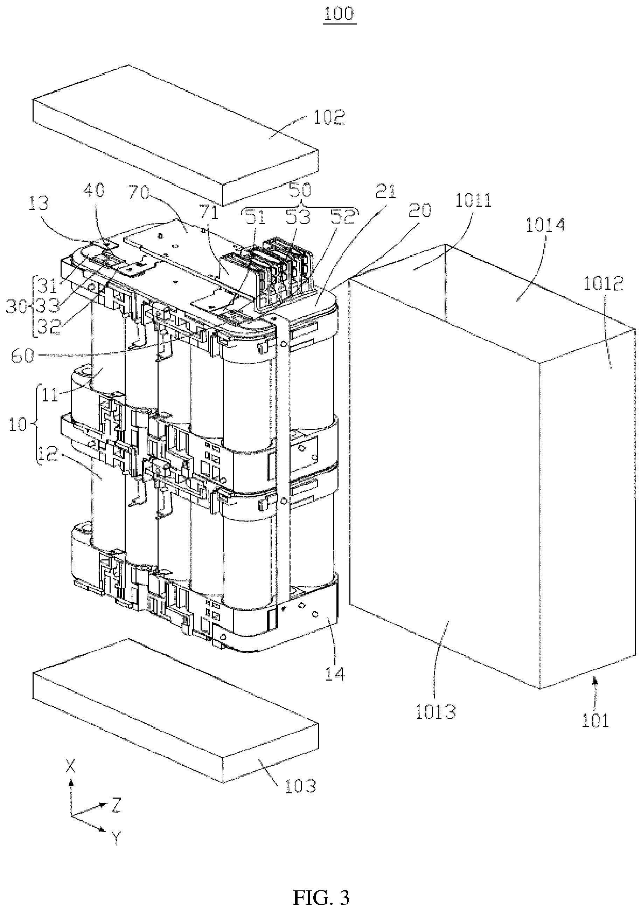

In some embodiments, referring to FIG. 2 and FIG. 3, the second housing 102 of the battery module 100 is located at one end of the first housing 101 in the first direction X, and the third housing 103 is located at another end of the first housing 101 in the first direction X. The first housing 101, the second housing 102, and the third housing 103 can be connected by bolt connection, adhesive connection, snap-fitting connection, welding, or the like and this is not specifically limited herein. The battery pack 10 and the first conductive member 30 being accommodated in the accommodating cavity 10a is conducive for the first housing 101, the second housing 102, and the third housing 103 to seal the battery pack 10 and the first conductive member 30, and plays a protective role for the battery pack 10 and the first conductive member 30, thereby reducing the risk of safety problems caused by the exposure of the battery pack 10 and the first conductive member 30.

In some embodiments, referring to FIG. 3, the first housing 101 includes a first wall 1011, a second wall 1012, a third wall 1013, and a fourth wall 1014 connected. The first wall 1011 and the second wall 1012 are disposed opposite each other in a second direction Y, and the third wall 1013 and the fourth wall 1014 are disposed opposite each other in a third direction Z. The second direction Y and the third direction Z are perpendicular to each other.

In some embodiments, referring to FIG. 3, the battery pack 10 includes a first battery group 11 and a second battery group 12. The first battery group 11 and the second battery group 12 are arranged in the first direction X. The first battery group 11 and the second battery group 12 are arranged in series or parallel. The first battery group 11 and the second battery group 12 each include a plurality of batteries 111 connected in series or parallel. The plurality of batteries 111 of the first battery group 11 are arranged in the second direction Y or the third direction Z, and the plurality of batteries 111 of the second battery group 12 are arranged in the second direction Y or the third direction Z. The foregoing arrangement of the first battery group 11 and the second battery group 12 and the batteries 111 of the first battery group 11 and the second battery group 12 is conducive to the combination of the plurality of batteries 111 to form a whole with a regular shape.

In some other embodiments, the battery pack 10 includes a first battery group 11 and a second battery group 12. The first battery group 11 and the second battery group 12 are arranged in the second direction Y. The first battery group 11 and the second battery group 12 are arranged in series or parallel. The first battery group 11 and the second battery group 12 each include a plurality of batteries 111 connected in series or parallel. The plurality of batteries 111 of the first battery group 11 are arranged in the second direction Y or the third direction Z, and the plurality of batteries 111 of the second battery group 12 are arranged in the second direction Y or the third direction Z.

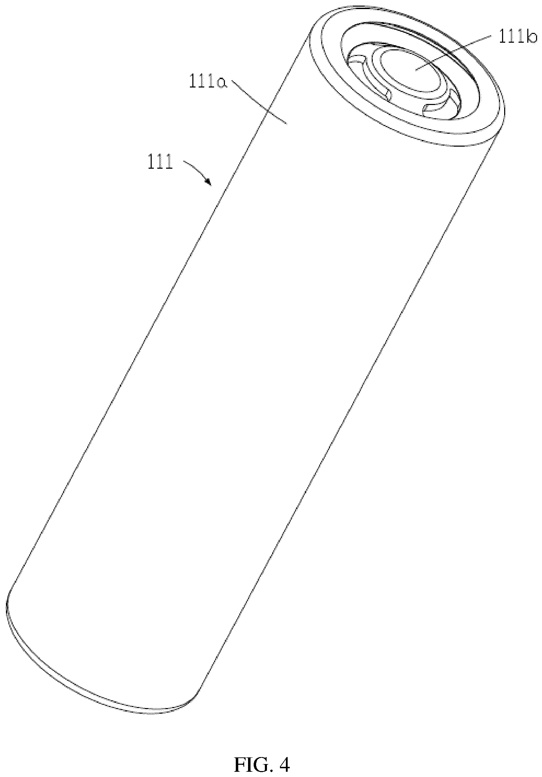

In some embodiments, referring to FIG. 4, the battery 111 is a cylindrical battery. The battery 111 includes a cylindrical body 111a, a cover body 111b, and an electrode assembly (not shown in the figure). The cylindrical body 111a and the cover body 111b are connected in an insulated manner to form an accommodating cavity (not shown in the figure), and the accommodating cavity accommodates the electrode assembly.

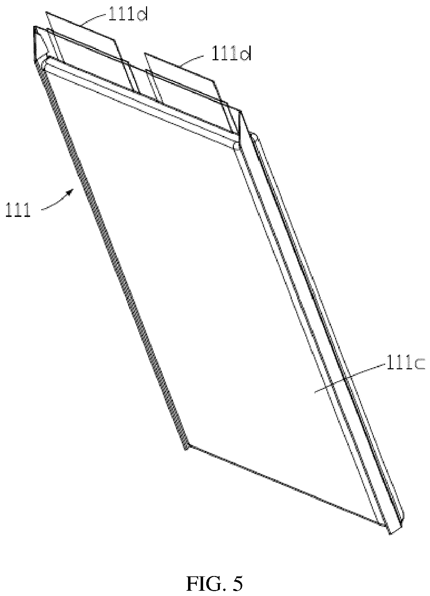

In some other embodiments, referring to FIG. 5, the battery 111 is a pouch battery. The battery 111 includes a packaging bag 111c, an electrode assembly (not shown in the figure), and an electrode terminal 111d. The packaging bag 111c may be a flexible aluminum-plastic film. The electrode assembly is accommodated in the packaging bag 111c, and the electrode terminal 111d is connected to the electrode assembly. At least a portion of the electrode terminal 111d extends out of the packaging bag 111c to lead out the polarity of the electrode assembly. In other embodiments, the battery is a square shell battery, and specific details of its structure are not described herein.

In some embodiments, the electrode assembly includes a first electrode plate, a second electrode plate, and a separator disposed between the first electrode plate and the second electrode plate, and the first electrode plate, the second electrode plate, and the separator are stacked and wound. The first electrode plate may be a positive electrode plate or a negative electrode plate, and the second electrode plate may be a positive electrode plate or a negative electrode plate. The first electrode plate and the second electrode plate have opposite polarities, and electrode plates with different polarities are made of different metal layers.

In an illustrative example, the first electrode plate is a positive electrode plate. The first electrode plate includes a metal aluminum layer and a positive electrode active material layer applied on a surface of the metal aluminum layer. The positive electrode active material layer includes one or more of lithium nickel cobalt manganese oxide, lithium cobalt oxide, lithium iron phosphate, lithium manganese oxide, lithium manganese iron phosphate, or cobalt free materials. The second electrode plate is a negative electrode plate. The second electrode plate includes a metal copper layer and a negative electrode active material layer applied on the metal copper layer, and the negative electrode active material layer includes one or more of artificial graphite, natural graphite, or silicon materials.

In some embodiments, the separator is made of a film material capable of insulating, such as polyethylene film, polypropylene film, polyester film, or polyimide film, to play a role in separating the positive electrode plate from the negative electrode plate.

In an embodiment in which the battery 111 is a cylindrical battery, the first electrode plate of the electrode assembly is electrically connected to the cover body 11 1b, so that the polarity of the cover body 11 1b is the same as that of the first electrode plate, and the second electrode plate is electrically connected to the cylindrical body 111a, so that the polarity of the cylindrical body 111a is the same as that of the second electrode plate.

In some embodiments, referring to FIG. 3, the battery pack 10 is provided with a first terminal 13 and a second terminal 14, with the polarity of the first terminal 13 opposite to that of the second terminal 14. For example, the polarity of the first terminal 13 is positive and the polarity of the second terminal 14 is negative. For another example, the polarity of the first terminal 13 is negative and the polarity of the second terminal 14 is positive. The first terminal 13 and the second terminal 14 are two general terminals that extend out after the batteries in the battery pack 10 are connected in series or parallel and are used to electrically connect the battery pack 10 as a whole to other circuits.

In some embodiments, referring to FIG. 3, the first connecting part 31 is electrically connected to the first terminal 13. The polarities of the first functional part 33 and the second connecting part 32 are the same as that of the first connecting part 31, and the second connecting part 32 is configured to electrically connect to another member outside the battery pack 10.

In some embodiments, referring to FIG. 1 to FIG. 3, the battery module 100 further includes a circuit board 70. The circuit board 70 is electrically connected to the first conductive member 30, so that the circuit board 70 is electrically connected to the battery pack 10 through the first conductive member 30. This is conducive to disconnecting from the battery pack 10 in a timely manner after the first conductive member 30 is blown in case of excessive current passing through the circuit board 70, and thereby is conducive to protecting the circuit board 70.

In some embodiments, referring to FIG. 1 to FIG. 3, the electrical connection between the circuit board 70 and the second connecting part 32 of the first conductive member 30 is conducive to disconnecting the circuit board 70 from the battery pack 10 in a timely manner after the first conductive member 30 is blown, and thereby is conducive to protecting the circuit board 70. The circuit board 70 is disposed on a side of the battery pack 10 connected to the first conductive member 30, so that the circuit board 70 and the battery pack 10 are arranged in the first direction X.

In some embodiments, a distance between the circuit board 70 and the battery pack 10 in the first direction X may be different from a distance between the first conductive member 30 and the battery pack 10.

In some embodiments, the circuit board 70 is apart from the first conductive member 30 when viewed in the first direction X. The first conductive member 30 is apart from the circuit board 70 when viewed in the first direction X, and this is conducive to reducing the risk of short circuit caused by contact of the first conductive member 30 with other electronic components on the circuit board 70.

In some embodiments, the circuit board 70 is a BMS (Battery Management System, battery management system) board. The board can collect the voltage, temperature, current, and other parameters of the battery pack 10 to monitor the running state of the battery pack 10, and this is conducive to improving the reliability of the battery module 100.

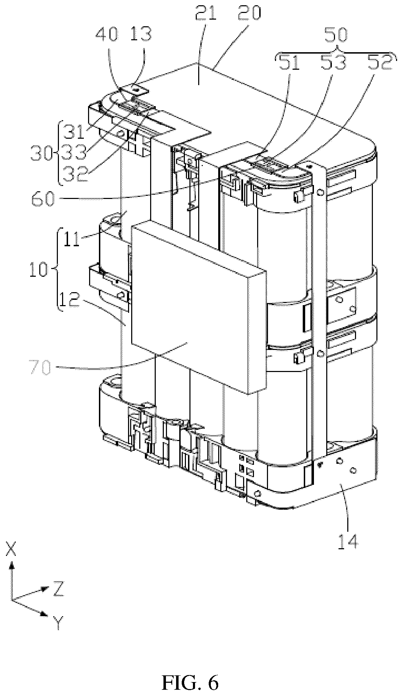

In some embodiments, referring to FIG. 6, the circuit board 70 and the battery pack 10 are arranged in the third direction Z. In other embodiments, the circuit board 70 and the battery pack 10 may also be arranged in the second direction Y, and this is not specifically limited herein.

Referring to FIG. 3, the battery module 100 further includes an insulator 20. The insulator 20 is connected to the battery pack 10 and disposed on a side of the battery pack 10 in the first direction X, so that the battery pack 10 and the insulator 20 are arranged in the first direction. In the first direction X, the insulator 20 is disposed between the first conductive member 30 and the battery pack 10. For example, the insulator 20 is disposed on a side, facing the battery pack 10, of the first connecting part 31, the first functional part 33, and the second connecting part 32. The first connecting part 31 and the battery pack 10 may be electrically connected via a conductive member passing through the insulator 20. The provision of the insulator 20 is conducive to reducing the risk of direct contact between the first connecting part 31, the first functional part 33, the second connecting part 32 and the battery pack 10, thereby reducing the risk of short circuit.

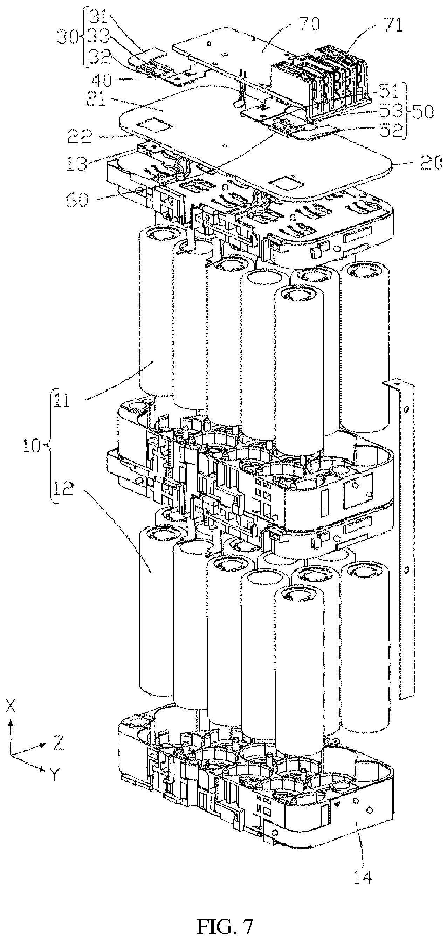

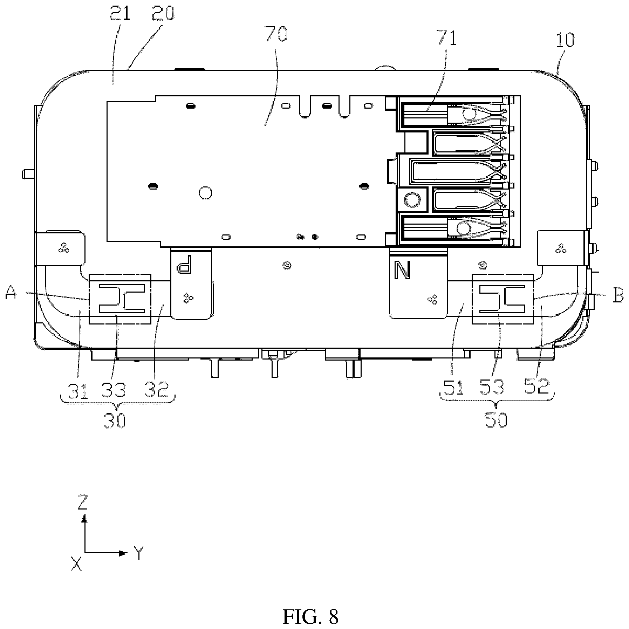

In some embodiments, referring to FIG. 7 and FIG. 8, the insulator 20 includes a first surface 21 and a second surface 22 facing opposite directions. The first surface 21 faces the first conductive member 30, and the first connecting part 31, the first functional part 33, and the second connecting part 32 are disposed on the first surface 21, and the second surface 22 faces the battery pack 10 and is in contact with the battery pack 10. This is conducive to improving the structural compactness of the battery module 100, enabling the insulator 20 to support the first connecting part 31, the first functional part 33, and the second connecting part 32, reducing the displacement between the first connecting part 31, the first functional part 33, and the second connecting part 32 due to force when the battery module 100 is impacted, and reducing the risk of damage to the first connecting part 31, the first functional part 33, and the second connecting part 32.

In some other embodiments, the first connecting part 31, the second connecting part 32, and the first functional part 33 are apart from the first surface 21. For example, the second connecting part 32 is fixed to a protruding structure of the insulator 20 disposed on the first surface 21, so that the first functional part 33 connected to the second connecting part 32 and the first connecting part 31 can be apart from the first surface 21.

In some embodiments, the insulator 20 is made of an insulative material such as plastic, rubber, or silicon, the shape of the insulator 20 may be plate-shaped, cover-shaped, or other irregular shapes, and this is not specifically limited herein.

In some embodiments, the first conductive member 30 may be made of a conductive metal material such as copper, nickel, or aluminum.

In some embodiments, the circuit board 70 is disposed on a side of the insulator 20 facing away from the battery pack 10 in the first direction X, so that the circuit board 70 is disposed opposite to the first surface 21, and this is conducive to reducing the risk of direct contact between the circuit board 70 and the battery pack 10, thereby reducing the risk of short circuit.

In some other embodiments, the insulator 20 may alternatively be omitted, the circuit board 70 is spaced apart from the battery pack 10, the circuit board 70 is fixedly connected with the first housing 101, the second housing 102, or the third housing 103, and the first conductive member 30 is fixed on a side of the circuit board 70 facing away from the battery pack 10.

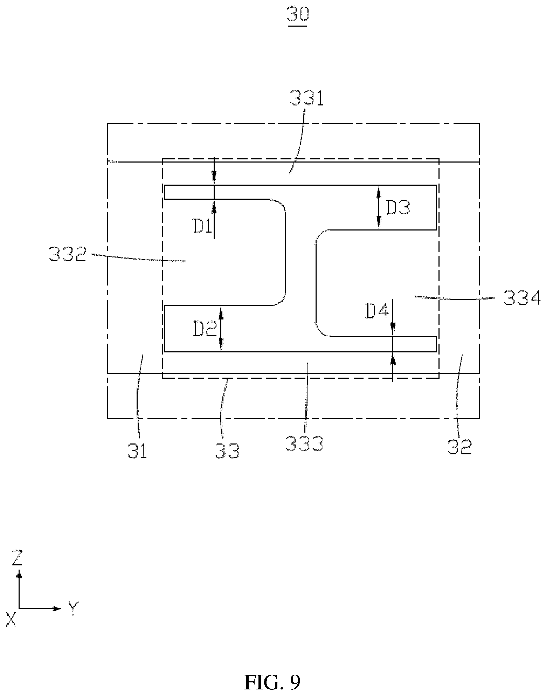

Referring to FIG. 3 and FIG. 8, the first connecting part 31 and the second connecting part 32 are spaced apart from each other in the second direction Y perpendicular to the first direction X. Referring to FIG. 8 and FIG. 9 together, the first functional part 33 is disposed between the first connecting part 31 and the second connecting part 32, and this is conducive to placing the first connecting part 31, the second connecting part 32, and the first functional part 33 on the first surface 21.

In some other embodiments, the first connecting part 31 and the second connecting part 32 are spaced apart from each other in the third direction Z, and the third direction Z, the first direction X, and the second direction Y are perpendicular to each other. In other embodiments, the first connecting part 31 and the second connecting part 32 may alternatively be spaced apart from each other in a direction perpendicular to the first direction X and at an included angle of less than 90° with the second direction Y or the third direction Z, and this is conducive to placing the first connecting part 31, the second connecting part 32, and the first functional part 33 on the first surface 21. In some embodiments, referring to FIG. 8, the circuit board 70 is provided with an interface 71. The interface 71 is configured for electrical connection with an external circuit.

The first functional part 33 plays a role in interrupting the current under abnormal conditions. The first connecting part 31 is electrically connected to the first terminal 13, and the second connecting part 32 is connected to the circuit board 70. The circuit board 70 is configured for electrical connection with external circuits. When the battery module 100 works, the interface 71 on the circuit board 70 is electrically connected to a circuit outside the battery pack 10, and the battery pack 10 undergoes charging and discharging, allowing the current to sequentially pass through the circuit board 70, the second connecting part 32, the first functional part 33, the first connecting part 31, and the first terminal 13 connected to the first connecting part 31. In extreme cases of high current generation within the battery pack 10, the current flowing through the first functional part 33 is also a large current, causing the first functional part 33 to heat up rapidly and be blown, so that the first connecting part 31 is disconnected from the second connecting part 32 to interrupt the current loop, thereby playing a role in protecting the battery pack 10.

Referring to FIG. 8 and FIG. 9, the first connecting part 31 and the second connecting part 32 are spaced apart from each other in the second direction Y. The first functional part 33 includes a first part 331 and a first protrusion 332. The first part 331 connects the first connecting part 31 and the second connecting part 32. The first protrusion 332 extends from the first connecting part 31 towards the second connecting part 32 along the second direction Y, and the first protrusion 332 is apart from both the first part 331 and the second connecting part 32. In extreme cases of high current generation within the battery pack 10, the first part 331 is blown, so that the first connecting part 31 is disconnected from the second connecting part 32. The first protrusion 332 is apart from both the first part 331 and the second connecting part 32, enabling the first functional part 33 to be more easily blown, reducing the risk of delayed blowing of the first functional part 33 when the current is too large, and improving the reliability of the battery module 100. Moreover, the provision of the first protrusion 332 is conducive to improving the structural strength of the first functional part 33 itself, playing a role in vibration reduction and buffering, and this is conducive to reducing the risk of fracture of the first functional part 33 under the action of an external force and improving the reliability of the battery module 100.

In some embodiments, referring to FIG. 9, the first functional part 33 further includes a second part 333, the second part 333 connects the first connecting part 31 and the second connecting part 32, and the second part 333 is apart from both the first part 331 and the first protrusion 332. In extreme cases of high current generation within the battery pack 10, both the first part 331 and the second part 333 are blown. The provision of the second part 333 is conducive to improving the structural strength of the first functional part 33, improving the uniformity of force applied to the first functional part 33, and reducing the risk of fracture of the first functional part 33 under the action of an external force.

In some embodiments, referring to FIG. 9, the first functional part 33 further includes a second protrusion 334. The second protrusion 334 extends from the second connecting part 32 towards the first connecting part 31 along the second direction Y. The second protrusion 334 is apart from all of the first part 331, the second part 333, the first connecting part 31, and the first protrusion 332. The second protrusion 334 is conducive to further improving the structural strength of the first functional part 33 itself, improving the uniformity of force applied to the first functional part 33, and increasing the effects of vibration reduction and buffering, and this is conducive to reducing the risk of fracture of the first functional part 33 under the action of an external force.

In some embodiments, referring to FIG. 9, the first connecting part 31 and the second connecting part 32 are spaced apart from each other in the second direction Y, and the first functional part 33 is disposed between the first connecting part 31 and the second connecting part 32. In the third direction Z, the first protrusion 332 and the second protrusion 334 being located between the first part 331 and the second part 333 is conducive to increasing the distance between the first part 331 and the second part 333 in the third direction Z so that the first part 331 and the second part 333 are not concentrated in one place, and this is conducive to sharing the risk of disconnection between the first connecting part 31 and the second connecting part 32 due to impact force. Moreover, the first protrusion 332 and the second protrusion 334 being located between the first part 331 and the second part 333 enables a part capable of connecting the first connecting part 31 and the second connecting part 32 to be staggered with a part not connecting the first connecting part 31 and the second connecting part 32, improving the uniformity of force applied to the first functional part 33, and this is conducive to reducing the risk of fracture of the first functional part 33 under the action of an external force.

In some embodiments, referring to FIG. 9, in the third direction Z, there are a first distance D1 between the first protrusion 332 and the first part 331 and a second distance D2 between the first protrusion 332 and the second part 333. The first distance D1 is different from the second distance D2, so that the first protrusion 332 is closer to one of the first part 331 and the second part 333 and farther away from the other of the first part 331 and the second part 333. The one of the first part 331 and the second part 333 farther away from the first protrusion 332, when blown, is not easily fused with the first protrusion 332, reducing the risk of not electrically disconnecting the first connecting part 31 from the second connecting part 32 when the first functional part 33 is blown; and the one of the first part 331 and the second part 333 closer to the first protrusion 332 is less prone to fracture under the action of an external force due to the effects of vibration reduction and buffering provided by the first protrusion 332.

In an illustrative example, the first distance D1 is less than the second distance D2.

In some embodiments, referring to FIG. 9, in the third direction Z, there are a third distance D3 between the second protrusion 334 and the first part 331 and a fourth distance D4 between the second protrusion 334 and the second part 333. The third distance D3 is different from the fourth distance D4, so that the second protrusion 334 is closer to one of the first part 331 and the second part 333 and farther away from the other of the first part 331 and the second part 333. The one of the first part 331 and the second part 333 farther away from the second protrusion 334, when blown, is not easily fused with the second protrusion 334, reducing the risk of not disconnecting the first connecting part 31 from the second connecting part 32 when the first functional part 33 is blown; and the one of the first part 331 and the second part 333 closer to the second protrusion 334 is less prone to fracture under the action of an external force due to the effects of vibration reduction and buffering provided by the second protrusion 334.

In an illustrative example, the third distance D3 is greater than the fourth distance D4.

In some embodiments, referring to FIG. 9, the first distance D1 is different from the third distance D3, the second distance D2 is different from the fourth distance D4, the first distance D1 is less than the second distance D2, and the third distance D3 is greater than the fourth distance D4. This is conducive to improving the uniformity of force applied to the first functional part 33 and reducing the risk of damage to the first functional part 33 due to stress concentration.

In some embodiments, referring to FIG. 9, a projection of the first protrusion 332 in the second direction Y partially overlaps a projection of the second protrusion 334 in the second direction Y, and the first protrusion 332 and the second protrusion 334 are not completely aligned. This is conducive to improving the uniformity of force applied to the first functional part 33 and reducing the risk of fracture of the first functional part 33 under the action of an external force.

In some embodiments, referring to FIG. 3 and FIG. 7, the battery module 100 further includes a first thermal insulation layer 40, the first thermal insulation layer 40 covering the first functional part 33. The first thermal insulation layer 40 made of electrically insulative materials and thermally insulative materials is conducive to reducing the risk of excessively high temperatures affecting the insulator 20 or the battery pack 10 when the first functional part 33 is blown. The first thermal insulation layer 40 covers the first functional part 33 and also covers the blown part, and this is conducive to reducing the risk of the blown part falling into the battery pack 10.

In some embodiments, the electrically insulative and thermally insulative materials used in the first thermal insulation layer 40 may be fibrous substances such as glass fiber, magnesium oxide fiber, calcium oxide fiber, and preoxidized carbon fiber, or substances filled with thermal insulation particles within the fiber layer such as aerogel, or hollow ceramics, or high-temperature resistant plastic shells, or the like. There are other materials beyond these mentioned herein.

In some embodiments, referring to FIG. 8, the battery module 100 further includes a second conductive member 50. The second conductive member 50 is electrically connected to the battery pack 10. The second conductive member 50 includes a third connecting part 51, a fourth connecting part 52, and a second functional part 53 connecting the third connecting part 51 and the fourth connecting part 52. The third connecting part 51, the fourth connecting part 52, and the second functional part 53 are located on a side of the battery pack 10 in the first direction, and the second connecting part 32 is electrically connected to the battery pack 10.

In some embodiments, the first connecting part 31, the second connecting part 32, and the first functional part 33 of the first conductive member 30 are located on the same side of the battery pack 10 as the third connecting part 51, the fourth connecting part 52, and the second functional part 53 of the second conductive member 50.

In some embodiments, the first conductive member 30 and the second conductive member 50 are located on different sides of the battery pack 10. The first conductive member 30 and the battery pack 10 are arranged in the first direction X, and the second conductive member 50 and the battery pack 10 are arranged in the second direction Y. This is conducive to fully utilizing the space around the battery pack 10 and improving the energy density of the battery module 100.

In some embodiments, the distance between the first conductive member 30 and the battery pack 10 is different from the distance between the second conductive member 50 and the battery pack 10 in the first direction X.

In the embodiments with the insulator 20 provided, the insulator is located between the second conductive member 50 and the battery pack 10, and the third connecting part 51, the fourth connecting part 52, and the second functional part 53 are disposed on the first surface 21.

In some embodiments, referring to FIG. 8, the battery pack 10 is provided with a second terminal 14. The first connecting part 31 is electrically connected to the first terminal 13, and the fourth connecting part 52 is electrically connected to the second terminal 14. In an illustrative example, the first connecting part 31 is electrically connected to the first terminal 13, the polarities of the first connecting part 31, the first functional part 33, and the second connecting part 32 are all positive, and the second connecting part 32 is electrically connected to the circuit board 70; and the fourth connecting part 52 is electrically connected to the second terminal 14, the polarities of the third connecting part 51, the second functional part 53, and the fourth connecting part 52 are all negative, the third connecting part 51 is electrically connected to the circuit board 70, and the interface 71 of the circuit board 70 is electrically connected to a circuit outside the battery pack 10.

In some embodiments, referring to FIG. 7 and FIG. 8, the insulator 20 includes a first surface 21 and a second surface 22 facing opposite directions. The first surface 21 faces the second conductive member 50, and the third connecting part 51, the second functional part 53, and the fourth connecting part 52 are disposed on the first surface 21, and the second surface 22 faces the battery pack 10 and is in contact with the battery pack 10. This is conducive to improving the structural compactness of the battery module 100, enabling the insulator 20 to support the third connecting part 51, the second functional part 53, and the fourth connecting part 52, reducing the displacement between the third connecting part 51, the second functional part 53, and the fourth connecting part 52 due to force when the battery module 100 is impacted, and reducing the risk of damage to the third connecting part 51, the second functional part 53, and the fourth connecting part 52.

In some embodiments, referring to FIG. 7 and FIG. 8, the first surface 21 faces the first conductive member 30 and the second conductive member 50, and the first connecting part 31, the first functional part 33, the second connecting part 32, the third connecting part 51, the second functional part 53, and the fourth connecting part 52 are disposed on the first surface 21.

In some other embodiments, the third connecting part 51, the fourth connecting part 52, and the second functional part 53 are apart from the first surface 21. For example, the fourth connecting part 52 is fixed to a protruding structure of the insulator 20 disposed on the first surface 21, so that the first functional part 33 connected to the fourth connecting part 52 and the first connecting part 31 can be apart from the first surface 21.

In some embodiments, the second conductive member 50 may be made of a conductive metal material such as copper, nickel, or aluminum.

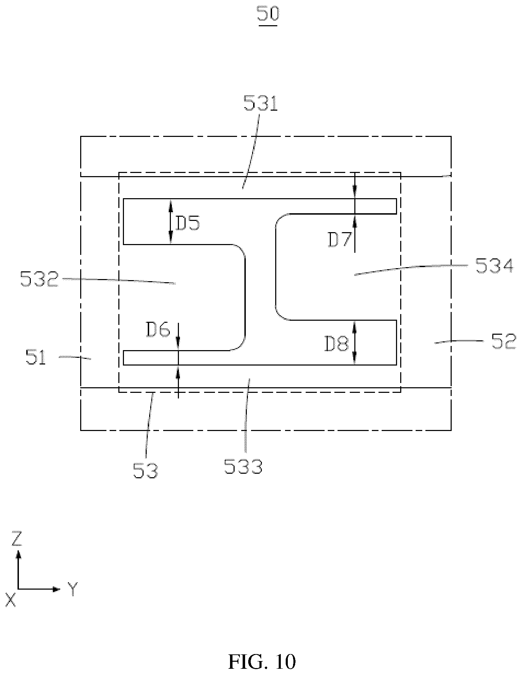

In some embodiments, referring to FIG. 8, the third connecting part 51 and the fourth connecting part 52 are spaced apart from each other in the second direction Y. Also referring to FIG. 10, the second functional part 53 is disposed between the third connecting part 51 and the fourth connecting part 52, and this is conducive to placing the third connecting part 51, the fourth connecting part 52, and the second functional part 53 on the first surface 21.

In other embodiments, the third connecting part 51 and the fourth connecting part 52 are spaced apart from each other in the third direction Z, or the third connecting part 51 and the fourth connecting part 52 are spaced apart from each other in a direction perpendicular to the first direction X and at an included angle of less than 90° with the second direction Y or the third direction Z, and this is conducive to placing the third connecting part 51, the fourth connecting part 52, and the second functional part 53 on the first surface 21.

The second functional part 53 plays a role in interrupting the current under abnormal conditions. The first connecting part 31 is electrically connected to one of the first terminal 13 and the second terminal 14, and the fourth connecting part 52 is electrically connected to the other of the first terminal 13 or the second terminal 14. The second connecting part 32 is electrically connected to the circuit board 70, and the third connecting part 51 is electrically connected to the circuit board 70. The circuit board 70 is configured for electrical connection with external circuits. When the battery module 100 works, the interface 71 of the circuit board 70 is electrically connected to a circuit outside the battery pack 10, and the battery pack 10 undergoes charging and discharging, allowing the current to sequentially pass through the circuit board 70, the second connecting part 32, the first functional part 33, the first connecting part 31, the first terminal 13 or second terminal 14 connected to the first connecting part 31, the battery 111 in the battery pack 10, the first terminal 13 or second terminal 14 connected to the fourth connecting part 52, the fourth connecting part 52, the second functional part 53, the third connecting part 51, and the circuit board 70. In extreme cases of high current generation within the battery pack 10, the current flowing through the first functional part 33 and the second functional part 53 is also a large current, causing the first functional part 33 and the second functional part 53 to heat up rapidly and be blown, so that the first connecting part 31 is disconnected from the second connecting part 32 and the third connecting part 51 is disconnected from the fourth connecting part 52 to interrupt the current loop, thereby playing a role in protecting the battery pack 10.

In some embodiments, referring to FIG. 10, the third connecting part 51 and the fourth connecting part 52 are spaced apart from each other in the second direction Y. The second functional part 53 includes a third part 531 and a third protrusion 532. The third part 531 connects the third connecting part 51 and the fourth connecting part 52. The third protrusion 532 extends from the third connecting part 51 towards the fourth connecting part 52 along the second direction Y, and the third protrusion 532 is apart from both the third part 531 and the fourth connecting part 52. In extreme cases of high current generation within the battery pack 10, the third part 531 is blown, so that the third connecting part 51 is disconnected from the fourth connecting part 52. The third protrusion 532 is apart from both the third part 531 and the fourth connecting part 52, enabling the second functional part 53 to be more easily blown, reducing the risk of delayed blowing of the second functional part 53 when the current is too large, and improving the reliability of the battery module 100. Moreover, the provision of the third protrusion 532 is conducive to improving the structural strength of the second functional part 53 itself, playing a role in vibration reduction and buffering, and this is conducive to reducing the risk of fracture of the second functional part 53 under the action of an external force and improving the reliability of the battery module 100.

In some embodiments, referring to FIG. 10, the second functional part 53 further includes a fourth part 533, the fourth part 533 connects the third connecting part 51 and the fourth connecting part 52, and the fourth part 533 is apart from both the third part 531 and the third protrusion 532. In extreme cases of high current generation within the battery pack 10, both the third part 531 and the fourth part 533 are blown. The provision of the fourth part 533 is conducive to improving the structural strength of the second functional part 53, improving the uniformity of force applied to the second functional part 53, and reducing the risk of fracture of the second functional part 53 under the action of an external force.

In some embodiments, referring to FIG. 10, the second functional part 53 further includes a fourth protrusion 534. The fourth protrusion 534 extends from the fourth connecting part 52 towards the third connecting part 51 along the second direction Y. The fourth protrusion 534 is apart from all of the third part 531, the fourth part 533, the third connecting part 51, and the third protrusion 532. The fourth protrusion 534 is conducive to further improving the structural strength of the second functional part 53 itself, improving the uniformity of force applied to the second functional part 53, and increasing the effects of vibration reduction and buffering, and this is conducive to reducing the risk of fracture of the second functional part 53 under the action of an external force.

In some embodiments, referring to FIG. 10, the third connecting part 51 and the fourth connecting part 52 are spaced apart from each other in the second direction Y, and the second functional part 53 is disposed between the third connecting part 51 and the fourth connecting part 52. In the third direction Z, the third protrusion 532 and the fourth protrusion 534 being located between the third part 531 and the fourth part 533 is conducive to increasing the distance between the third part 531 and the fourth part 533 in the third direction Z so that the third part 531 and the fourth part 533 are not concentrated in one place, and this is conducive to sharing the risk of disconnection between the third connecting part 51 and the fourth connecting part 52 due to impact force. Moreover, the third protrusion 532 and the fourth protrusion 534 being located between the third part 531 and the fourth part 533 enables a part capable of connecting the third connecting part 51 and the fourth connecting part 52 to be staggered with a part not connecting the third connecting part 51 and the fourth connecting part 52, improving the uniformity of force applied to the second functional part 53, and this is conducive to reducing the risk of fracture of the second functional part 53 under the action of an external force.

In some embodiments, referring to FIG. 10, in the third direction Z, there are a fifth distance D5 between the third protrusion 532 and the third part 531 and a sixth distance D6 between the third protrusion 532 and the fourth part 533. The fifth distance D5 is different from the sixth distance D6, so that the third protrusion 532 is closer to one of the third part 531 and the fourth part 533 and farther away from the other of the third part 531 and the fourth part 533. The one of the third part 531 and the fourth part 533 farther away from the third protrusion 532, when blown, is not easily fused with the third protrusion 532, reducing the risk of not electrically disconnecting the third connecting part 51 from the fourth connecting part 52 when the second functional part 53 is blown; and the one of the third part 531 and the fourth part 533 closer to the third protrusion 532 is less prone to fracture under the action of an external force due to the effects of vibration reduction and buffering provided by the third protrusion 532.

In an illustrative example, the fifth distance D5 is greater than the sixth distance D6.

In some embodiments, referring to FIG. 10, there are a seventh distance D7 between the fourth protrusion 534 and the third part 531 and an eighth distance D8 between the fourth protrusion 534 and the fourth part 533. The seventh distance D7 is different from the eighth distance D8, so that the fourth protrusion 534 is closer to one of the third part 531 and the fourth part 533 and farther away from the other of the third part 531 and the fourth part 533. The one of the third part 531 and the fourth part 533 farther away from the fourth protrusion 534, when blown, is not easily fused with the fourth protrusion 534, reducing the risk of not disconnecting the third connecting part 51 from the fourth connecting part 52 when the second functional part 53 is blown; and the one of the third part 531 and the fourth part 533 closer to the fourth protrusion 534 is less prone to fracture under the action of an external force due to the effects of vibration reduction and buffering provided by the fourth protrusion 534.

In an illustrative example, the seventh distance D7 is less than the eighth distance D8.

In some embodiments, referring to FIG. 10, the fifth distance D5 is different from the seventh distance D7, the sixth distance D6 is different from the eighth distance D8, and the fifth distance D5 is greater than the sixth distance D6, and the seventh distance D7 is less than the eighth distance D8. This is conducive to improving the uniformity of force applied to the second functional part 53 and reducing the risk of damage to the second functional part 53 due to stress concentration.

In some embodiments, referring to FIG. 8, the first distance D1 is less than the second distance D2, the third distance D3 is greater than the fourth distance D4, the fifth distance D5 is greater than the sixth distance D6, and the seventh distance D7 is less than the eighth distance D8. In addition, the first functional part 33 and the second functional part 53 form an axisymmetric structure, and under the condition that the temperature of the first functional part 33 and the second functional part 53 rises, this is conducive to improving the consistency of the influence of the first functional part 33 and the second functional part 53 on various parts of the battery pack 10 and the consistency of force applied to the first functional part 33 and the second functional part 53 when subjected to impact.

In some embodiments, referring to FIG. 10, a projection of the third protrusion 532 in the second direction Y partially overlaps a projection of the fourth protrusion 534 in the second direction Y, and the third protrusion 532 and the fourth protrusion 534 are not completely aligned. This is conducive to improving the uniformity of force applied to the second functional part 53 and reducing the risk of fracture of the second functional part 53 under the action of an external force.

In some embodiments, referring to FIG. 3 and FIG. 7, the battery module 100 further includes a second thermal insulation layer 60, the second thermal insulation layer 60 covering the second functional part 53. The second thermal insulation layer 60 made of electrically insulative materials and thermally insulative materials is conducive to reducing the risk of excessively high temperatures affecting the insulator 20 or the battery pack 10 when the second functional part 53 is blown. The second thermal insulation layer 60 covers the second functional part 53 and also covers the blown part, and this is conducive to reducing the risk of the blown part falling into the battery pack 10.

In some embodiments, the electrically insulative and thermally insulative materials used in the second thermal insulation layer 60 may be fibrous substances such as glass fiber, magnesium oxide fiber, calcium oxide fiber, and preoxidized carbon fiber, or substances filled with thermal insulation particles within the fiber layer such as aerogel, or hollow ceramics, or high-temperature resistant plastic shells, or the like. There are other materials beyond these mentioned herein.

In some embodiments, referring to FIG. 8, the projection of the first functional part 33 in the second direction Y at least partially overlaps the projection of the second functional part 53 in the second direction Y, so that the first functional part 33 is at least partially aligned in the second direction Y. This is conducive to allowing the first functional part 33 and the second functional part 53 to have more uniform influence on the battery pack 10 when the temperature rises.

In some embodiments, referring to FIG. 3 and FIG. 7, the circuit board 70 is also electrically connected to the second conductive member 50, and this is conducive to allowing the circuit board 70 to be electrically connected to the battery pack 10 via the first conductive member 30 and the second conductive member 50.

In some embodiments, referring to FIG. 3 and FIG. 7, the circuit board 70 is electrically connected to the third connecting part 51. In some embodiments, the electrical connections between the circuit board 70 and the second connecting part 32 and between the circuit board 70 and the third connecting part 51 are conducive to disconnecting the circuit board 70 from the battery pack 10 in a timely manner after the first conductive member 30 and/or the second conductive member 50 is blown, and thereby are conducive to protecting the circuit board 70.

In the embodiments with the circuit board 70 provided, the circuit board 70 is electrically connected to both the second connecting part 32 and the third connecting part 51, and in the first direction X, the circuit board 70 is disposed on a side of the battery pack 10 connected to the first conductive member 30 and the second conductive member 50. When viewed in the first direction X, the circuit board 70 is apart from the first conductive member 30, and the circuit board 70 is also apart from the second conductive member 50. This is conducive to reducing the risk of short circuit caused by contact of the first conductive member 30 and the second conductive member 50 with other electronic components on the circuit board 70.

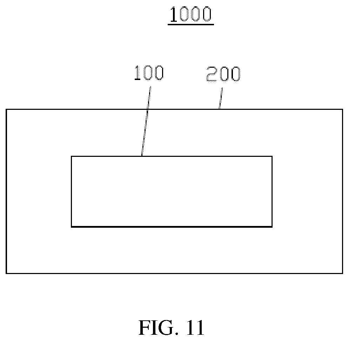

Referring to FIG. 11, an embodiment of this application further provides an electric device 1000. The electric device 1000 includes a device main body 200 and the battery module 100 in any one of the foregoing embodiments, and the battery module 100 is installed on the device main body 200.

The electric device 1000 adopts the technical solutions of any one of the foregoing embodiments of the battery module 100 and therefore has at least the beneficial effects brought by the technical solutions of any one of the foregoing embodiments of the battery module 100. Details are not repeated herein.

The electric device 1000 may be a drone, an electric two-wheeled vehicle, a cleaning robot, an energy storage device, an electric tool, or the like.

In addition, those of ordinary skill in the art should be aware of that the foregoing embodiments are only intended to describe this application, but not to limit this application. Appropriate modifications and variations made to the foregoing embodiments without departing from the essential spirit and scope of this application all fall within the scope of this application.

## Claims

1. A battery module(100), comprising:
a battery pack(10); and
a first conductive member(30) comprising a first connecting part(31), a second connecting part(32), and a first functional part(33); wherein the first connecting part(31), the second connecting part(32), and the first functional part(33) are located at a side of the battery pack(10) in a first direction(X); the first connecting part(31) is electrically connected to the battery pack(10), the first connecting part(31) and the second connecting part(32) are spaced apart from each other in a second direction(Y), the second direction(Y) being perpendicular to the first direction(X), and the first functional part(33) is disposed between the first connecting part(31) and the second connecting part(32); and
the first functional part(33) comprises a first part(331) and a first protrusion(332), wherein the first part(331) connects the first connecting part(31) and the second connecting part(32); the first protrusion(332) extends from the first connecting part(31) towards the second connecting part(32) along the second direction(Y); and the first protrusion(332) is apart from both the first part(331) and the second connecting part(32).

2. The battery module(100) according to claim 1, wherein,
the first functional part(33) further comprises a second part(333), the second part(333) connects the first connecting part(31) and the second connecting part(32), and the second part(333) is apart from both the first part(331) and the first protrusion(332).

3. The battery module(100) according to claim 2, wherein,
the first functional part(33) further comprises a second protrusion(334), the second protrusion(334) extends from the second connecting part(32) towards the first connecting part(31) along the second direction(Y), and the second protrusion(334) is apart from all of the first part(331), the second part(333), the first connecting part(31), and the first protrusion(332).

4. The battery module(100) according to claim 3, wherein,
the first protrusion(332) and the second protrusion(334) are located between the first part(331) and the second part(333) in a third direction(Z), and the third direction(Z), the first direction(X), and the second direction(Y) are perpendicular to each other.

5. The battery module(100) according to claim 4, wherein,
in the third direction(Z), a first distance between the first protrusion(332) and the first part(331) and a second distance between the first protrusion(332) and the second part(333), are different from each other.

6. The battery module(100) according to claim 5, wherein,
in the third direction(Z), a third distance between the second protrusion(334) and the first part(331) and a fourth distance between the second protrusion(334) and the second part(333), are different from each other.

7. The battery module(100) according to claim 6, wherein,
the first distance is different from the third distance, and the second distance is different from the fourth distance.

8. The battery module(100) according to any one of claims 4 to 7, wherein,
a projection of the first protrusion(332) in the second direction(Y) partially overlaps a projection of the second protrusion(334) in the second direction(Y).

9. The battery module(100) according to any one of claims 1 to 8, wherein,
further comprises a second conductive member(50); wherein the second conductive member(50) comprises a third connecting part(51), a fourth connecting part(52), and a second functional part(53); the third connecting part(51), the fourth connecting part(52), and the second functional part(53) are located at a side of the battery pack(10) in the first direction(X); the fourth connecting part(52) is electrically connected to the battery pack(10), the third connecting part(51) and the fourth connecting part(52) are spaced apart from each other in the second direction(Y), and the second functional part(53) is disposed between the third connecting part(51) and the fourth connecting part(52); and
the second functional part(53) comprises:
a third part(531) connecting the third connecting part(51) and the fourth connecting part(52);
a fourth part(533) connecting the third connecting part(51) and the fourth connecting part(52), wherein the third part(531) is apart from the fourth part(533);
a third protrusion(532) extending from the third connecting part(51) towards the fourth connecting part(52) along the second direction(Y), wherein the third protrusion(532) is apart from all of the third part(531), the fourth part(533), and the fourth connecting part(52); and
a fourth protrusion(534) extending from the fourth connecting part(52) towards the third connecting part(51) along the second direction(Y), wherein the fourth protrusion(534) is apart from all of the third part(531), the fourth part(533), the third protrusion(532), and the third connecting part(51); wherein
the third protrusion(532) and the fourth protrusion(534) are located between the third part(531) and the fourth part(533) in a third direction(Z); and the third direction(Z), the first direction(X), and the second direction(Y) are perpendicular to each other.

10. The battery module(100) according to claim 9, wherein,
in the third direction(Z), a fifth distance between the third protrusion(532) and the third part(531) and a sixth distance between the third protrusion(532) and the fourth part(533), are different from each other.

11. The battery module(100) according to claim 9 or 10, wherein,
in the third direction(Z), a seventh distance between the fourth protrusion(534) and the third part(531) and an eighth distance between the fourth protrusion(534) and the fourth part(533), are different from each other.

12. The battery module(100) according to claim 9, wherein,
a projection of the first functional part(33) in the second direction(Y) at least partially overlaps a projection of the second functional part(53) in the second direction(Y).

13. The battery module(100) according to claim 9, wherein,
further comprises a circuit board(70), wherein the circuit board(70) is electrically connected to both the second connecting part(32) and the third connecting part(51); and in the first direction(X), the circuit board(70) is disposed on a side of the battery pack(10) connected to the first conductive member(30) and the second conductive member(50); and
when viewed in the first direction(X), the circuit board(70) is apart from the first conductive member(30), and the circuit board(70) is apart from the second conductive member(50).

14. The battery module(100) according to claim 1, wherein,
further comprises a circuit board(70), the circuit board(70) is electrically connected to the second connecting part(32), and in the first direction(X), the circuit board(70) is disposed on a side of the battery pack(10) connected to the first conductive member(30); and
when viewed in the first direction(X), the circuit board(70) is apart from the first conductive member(30).

15. An electric device(1000), comprising the battery module(100) according to any one of claims 1 to 14.
